# EUROPÄISCHE PATENTSCHRIFT

(11) **EP 1 111 315 B1**
(45) Veröffentlichungstag und Bekanntmachung des Hinweises auf die Patenterteilung: **12.03.2003**
(21) Anmeldenummer: 00126557.8
(22) Anmeldetag: 12.12.2000
(51) Int. Cl.: F25B 17/08, F25B 29/00, F25B 49/04

(54) **Adsorptionswärmepumpe mit mehreren Modulen**
Adsorption heat pump with several modules
Pompe à chaleur à adsorption avec plusieurs modules

(30) Priorität: 13.12.1999 AT 208699
(43) Veröffentlichungstag der Anmeldung: 27.06.2001
(73) Patentinhaber: Vaillant GmbH, 42859 Remscheid (DE)
(72) Erfinder: Lang, Rainer, Dr., 51067 Köln (DE)
(74) Vertreter: Hocker, Thomas

(56) Entgegenhaltungen:
- CH-A- 691 744
- DE-A- 3 509 564
- DE-A- 19 507 919
- DE-A- 19 730 699
- DE-A- 19 902 694
- FR-A- 641 486
- US-A- 2 021 994
- US-A- 4 881 376

## Beschreibung

Die Erfindung bezieht sich auf eine Adsorptionswärmepumpe gemäß dem Oberbegriff des Anspruches 1. Eine solche Adsorptionswärmepump ist durch Dokument DE-A-19902694 schon bekannt.

Sorptionswärmepumpen aller Art können zur Beheizung von Gebäuden sowie zur Bereitung von Warmwasser eingesetzt werden. Sie zeichnen sich durch eine besonders gute Effizienz aus, da sie mit Hilfe eines thermodynamischen Kreisprozesses Umgebungswärme auf ein für Heiz- oder Warmwasserzwecke nutzbares Temperaturniveau bringen. Durch diesen Effekt können mit derartigen Wärmepumpen deutlich höhere primärenergetische Nutzungsgrade erreicht werden, als mit konventioneller Heiztechnik.

Bei solchen Adsorptionswärmepumpen ist es erforderlich, Desorber und Adsorber von der Hochdruckphase in die Niederdruckphase und umgekehrt umzuschalten. Dies erfolgt bei den bekannten derartigen Wärmepumpen meist mit einzeln zu steuemden Ventilen oder Rückschlagklappen.

Dadurch ergibt sich ein sehr erheblicher konstruktiver Aufwand und während des Betriebes ergibt sich ein sehr erheblicher Steuerungsaufwand.

Ziel der Erfindung ist es, diese Nachteile zu vermeiden und eine Adsorptionswärmepumpe der eingangs erwähnten Art vorzuschlagen, die sich durch einen einfachen Aufbau und eine einfache Bedienung auszeichnet.

Erfindungsgemäß wird dies bei einer Adsorptionswärmepumpe der eingangs erwähnten Art durch die kennzeichnenden Merkmale des Anspruches 1 erreicht.

Durch die vorgeschlagenen Maßnahmen ergibt sich der Vorteil eines sehr einfachen Aufbaus. Dabei ergibt sich durch die Umschalteinrichtung auch eine sehr einfache Bedienung, da eben lediglich die Umschalteinrichtung um einen Schritt weitergeschaltet werden muß, um eben einen Desorber eines Moduls von der Hochdruckphase in die Niederdruckphase und umgekehrt zu schalten.

Durch die Merkmale des Anspruches 4 ergibt sich der Vorteil, daß analog zu Umschaltungen der Desorber und der Adsorber auch die Kondensatoren und Verdampfer in den Wärmeträgerkreisläufen in ihren Funktionen umgeschaltet werden können. Dadurch läßt sich der Betrieb besonders einfach gestalten.

Die Erfindung wird nun anhand der Zeichnung näher eräutert. Dabei zeigen:
Fig. 1 schematisch eine Adsorptionswärmepumpe,
Fig. 2 und 4 schematisch die Schaltung der Adsorber und Desorber in verschiedenen Schaltzuständen und
Fig. 3 und 5 schematisch die Schaltung der Verdampfer und Kondensatoren in verschiedenen Schaltzuständen.

Gleiche Bezugszeichen bedeuten in allen Figuren gleiche Einzelteile.

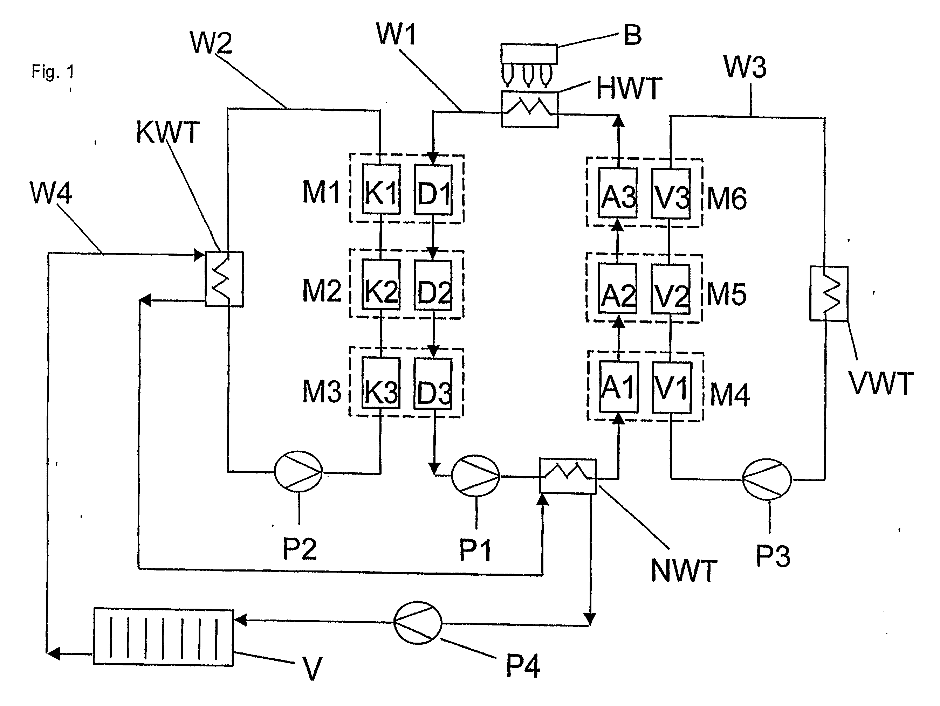

Wie aus der Fig. 1 ersichtlich ist, weist die Adsorberwärmepumpe im wesentlichen vier Wärmeträgerkreisläufe auf. Dabei umfaßt der Wärmeträgerkreislauf W1 die Desorber D1, D2, D3 von Modulen M1, M2, M3, die Adsorber A1, A2, A3 der Module M4, M5, M6 sowie einen von einem Brenner B beaufschlagten Hochtemperatur-Wärmetauscher HWT, einen Niedertemperatur-Wärmetauscher NWT und eine Pumpe P1, wobei diese Teile seriell miteinander verbunden sind.

Der Niedertemperatur-Wärmetauscher NWT ist weiters auch Teil eines Verbraucher-Wärmeträgerkreislaufs W4. Dieser Wärmeträgerkreislauf W4 umfaßt weiters einen Verbraucher V, einen Kondensator-Wärmetauscher KWT und eine Pumpe P4, die seriell miteinander zusammengeschaltet sind.

Dieser Kondensator-Wärmetauscher KWT ist weiters Teil eines weiteren Wärmeträgerkreislaufes W2. Dieser Wärmeträgerkreislauf W2 umfaßt weiters eine Pumpe P2 und die Kondensatoren K1, K2, K3 der Module M1, M2, M3.

Ein weiterer Wärmeträgerkreislauf W3 umfaßt die Verdampfer V1, V2, V3 der Module M4, M5, M6 einen Verdampfer-Wärmetauscher VWT, sowie eine Pumpe P3, wobei diese Teile seriell miteinander verbunden sind.

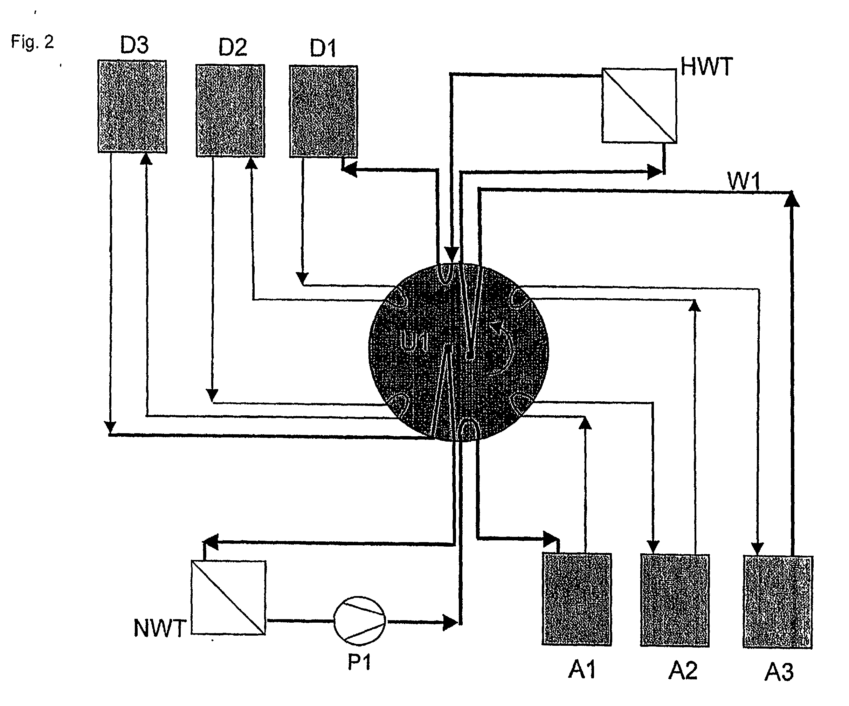

Aus Fig. 2 ist die Schaltung der Adsorber A1, A2, A3 und der Desorber D1, D2 und D3 der Module M1, M2, M3, M4, M5, M6 im Wärmeträgerkreislauf W1 zu ersehen. Dabei sind diese Bauteile untereinander und mit dem Hochtemperatur-Wärmetauscher HWT und der Serienschaltung des Niedertemperatur-Wärmetauschers NWT mit der Pumpe P1 über eine Umschalteinrichtung U1 in Reihe geschaltet.

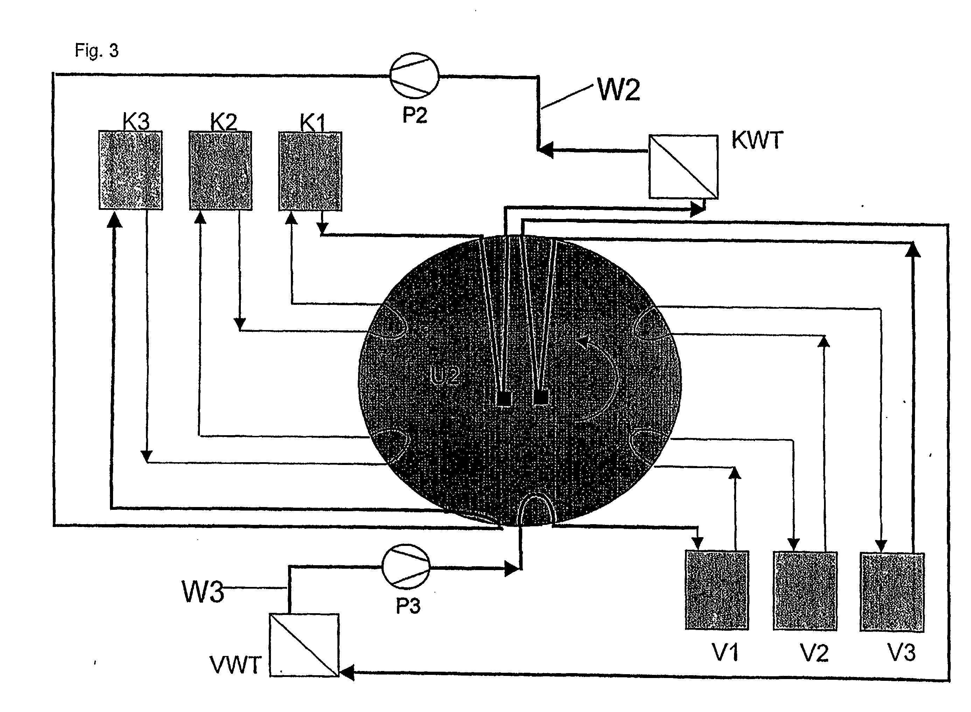

Weiter sind, wie aus der Fig. 3 zu ersehen ist, die Kondensatoren K1, K2, K3 und die Verdampfer V1, V2, V3 der Module M1, M2, M3, M4, M5 und M6 mit der Serienschaltung des Kondensator-Wärmetauschers KWT und der Pumpe P2 und der Serienschaltung des Verdampfer-Wärmetauschers VWT und der Pumpe P3 über eine weitere Umschalteinrichtung U2 miteinander in Reihe verbunden.

Mit diesen Umschalteinrichtungen U1 und U2 können die Module jeweils von der Hochdruckphase in die Niederdruckphase und umgekehrt geschaltet werden.

In den desorbierenden Modulen M1 bis M3 der Hochdruckphase wird in den Desorbem D1 bis D3 ein Adsorbat aus einem Adsorbens durch Erhitzen des Adsorbens verdampft und in den Kondensatoren K1 bis K3 kondensiert, wobei die Kondensationswärme im Kondensator-Wärmetauscher KWT an den Verbraucherkreis W4 abgegeben wird. Der Wärmeträger W1 wird beim Durchströmen der Desorber D1 bis D3 abgekühlt.

In den adsorbierenden Modulen M4 bis M6 der Niederdruckphase wird in den Verdampfern V1 bis V3 ein flüssiges Adsorbat verdampft und dadurch ein Wärmeträger des Wärmeträgerkreislaufes W3 abgekühlt, der im Verdampfer-Wärmetauscher VWT durch Aufnahme von Umgebungewärme aufgewärmt wurde. Das verdampfte Adsorbat wird dabei vom Adsorbens aufgenommen. Die dabei freiwerdende Adsorptionswärme wärmt den Wärmeträger (W1) auf.

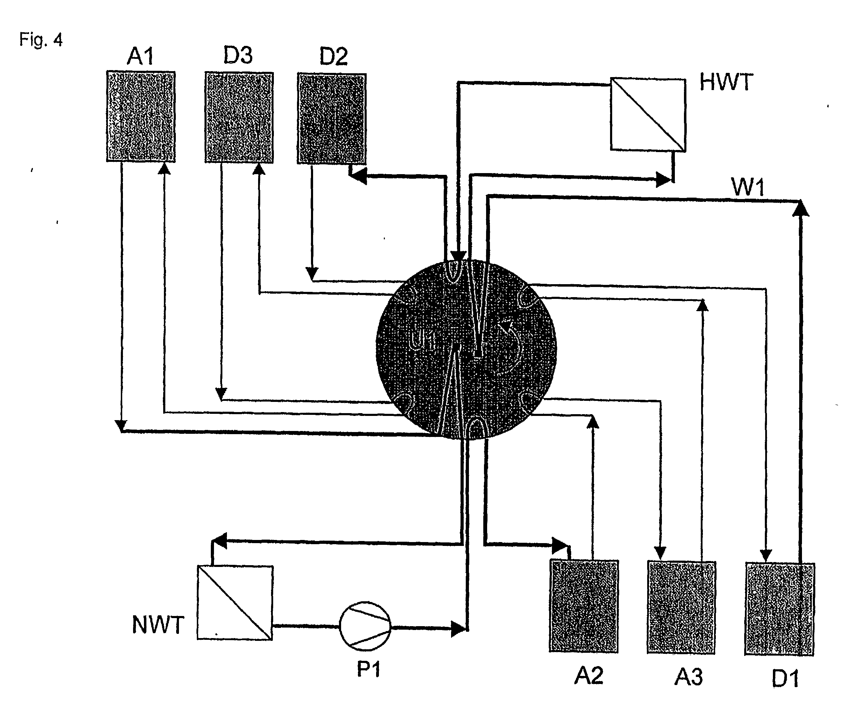

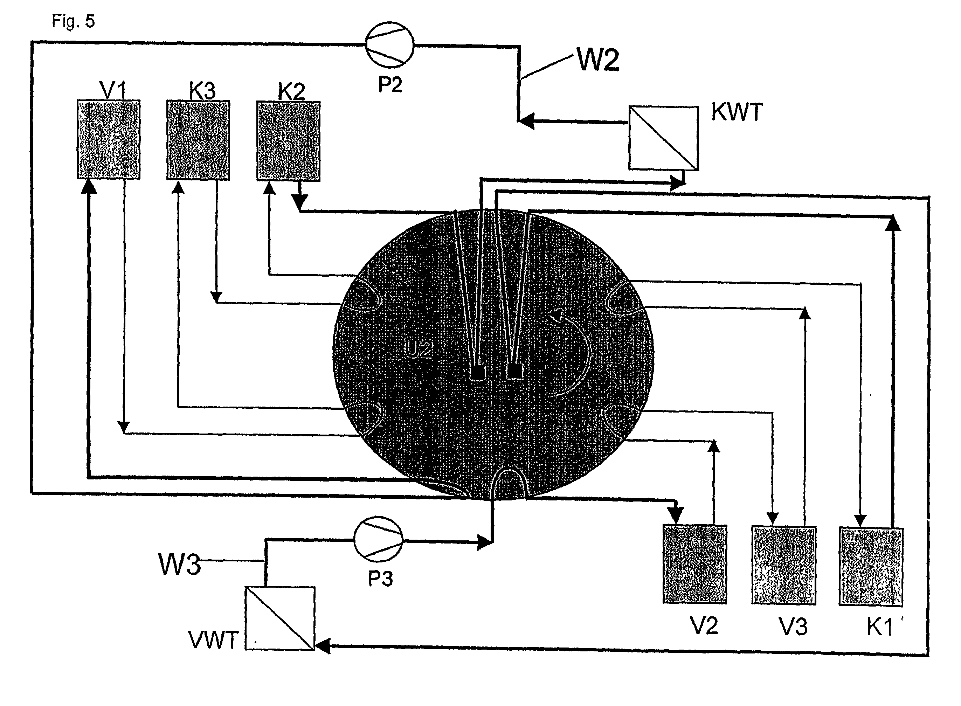

Mit den Umschalteinrichtungen U1 und U2 können, wie aus den Fig. 4 bzw. 5 im Vergleich zu den Fig. 2 bzw. 3 zu ersehen ist, die Position der Module M1 bis M6 in den Kreisläufen W1, W2, W3 der Reihe nach gewechselt werden. Beispielhaft ist dies für einen Schaltvorgang in den Fig. 2 und 4 für den Kreislauf W1 und in den Fig. 3 und 5 für eine serielle Verschaltung der Kondensatoren K1 bis K3 und der Verdampfer V1 bis V3 in den Kreisläufen W2 und W3 dargestellt.

Dies bedeutet für den Kreislauf W1, daß jedes Modul seine Position im Uhrzeigersinn wechselt.

So kommt der Desorber D3 in die Position von D2, D2 in jene von D1 und der Desorber D1 wechselt auf den Adsorber A3, A3 auf A2, der Adsorber A2 auf die Position des A1 und der Adsorber A1 wechselt auf die Position des Desorbers D3.

Dadurch kommt von den Modulen M1 bis M3, deren Desorber D1 bis D3 vor dem Schaltvorgang in der Hochdruckphase und die Adsorber A1 bis A3 der Module M4 bis M6 in der Niederdruckphase arbeiten, nach dem Schaltvorgang der Adsorber A1 in die Hochdruckphase und der Desorber D1 in die Niederdruckphase. Dies bedeutet, daß der Desorber D1 von der Hochdruckphase in die Niederdruckphase gewechselt und damit der Desorber D1 des Moduls M1 zum Adsorber gewechselt wird.

Analog hierzu bedeutet dies für die Kreisläufe W2 und W3, daß der Kondensator K1 des Moduls M1 vor dem Schaltvorgang entsprechend zum Verdampfer nach dem Schaltvorgang wird. Der Verdampfer V1 des Moduls M4 vor dem Schaltvorgang wird entsprechend zum Kondensator nach dem Schaltvorgang. Für den Betrieb der Kondensatoren K und der Verdampfer V, die beim Schaltvorgang von der Hochdruck- in die Niederdruckphase oder umgekehrt wechselt, können folgende Betriebsweisen ausgeführt werden.
1. Der Wärmeträger durchströmt in den Wärmeträgerkreisläufen W2 bzw. W3 die Module, die beim Schaltvorgang einen Betriebsphasenwechsel durchgemacht haben, nicht, so daß sich der Verdampfer, der vor dem Schaltvorgang noch als Kondensator gearbeitet hat, nur durch verdampfendes Adsorbat abkühlt, nicht aber durch Wärmeabfuhr an die Umgebung über den Kreislauf W3 an den Verdampfer-Wärmetauscher VWT. Entsprechend heizt sich der Kondensator, der vor dem Schaltvorgang noch Verdampfer war, nur durch kondensierendes Adsorbat auf und nicht durch Wärmezufuhr aus dem Kreislauf W2 vom Kondensator-Wärmetauscher KWT.
2. Der Wärmeträger durchströmt in den Wärmeträgerkreisläufen W2 bzw. W3 die Module, die beim Schaltvorgang einen Betriebsphasenwechsel durchgemacht haben, so daß sich der Verdampfer, der vor dem Schaltvorgang noch als Kondensator gearbeitet hat, sowohl durch verdampfendes Adsorbat als auch durch Wärmeabfuhr an die Umgebung über den Kreislauf W3 an den Verdampfer-Wärmetauscher VWT abkühlt. Entsprechend heizt sich der Kondensator, der vor dem Schaltvorgang noch als Verdampfer gearbeitet hat, sowohl durch kondensierendes Adsorbat als auch durch Wärmezufuhr aus dem Kreislauf W2 vom Kondensator-Wärmetauscher KWT auf.

## Patentansprüche

1. Adsorptionswärmepumpe mit mehreren Modulen, wobei außer einem einen Verbraucher (V), eine Pumpe (P4), sowie zwei Wärmetauscher (KWT, NWT) aufweisenden Verbraucherkreislauf (W4), insgesamt mindestens drei ebenfalls je eine Pumpe (P1, P2, P3) aufweisende Wärmeträgerkreisläufe (W1, W2, W3) zusammengeschaltet sind, von denen einer (W1) alle Adsorber (A) und Desorber (D) aller Module (M1, M2, M3, M4, M5, M6) seriell mit einem von einem Brenner (B) beaufschlagbaren Hochtemperatur-Wärmetauscher (HWT), mit einem Niedertemperatur-Wärmetauscher (NWT) sowie einer Pumpe (P1) verbindet, wobei in einem weiteren Wärmeträgerkreislauf (W2) die Kondensatoren (K1, K2, K3) der Module (M1, M2, M3) mit einem Kondensator-Wärmetauscher (KWT) und der Pumpe (P2) seriell zusammengeschaltet sind und im dritten Wärmeträgerkreislauf (W3) die Verdampfer (V1, V2, V3) aller Module (M4, M5, M6) seriell mit einem Verdampfer-Wärmetauscher (VWT) und einer Pumpe (P3) zusammengeschaltet sind, **dadurch gekennzeichnet, daß** zumindest eine mit den Adsorbern (A) und Desorbern (D) verbundene Umschalteinrichtung (U1) vorgesehen ist, mit der die Adsorber (A) und Desorber (D), der Reihe nach in ihrer Funktion derart umschaltbar sind, dass der wärmste Desorber (D1) die Position und Funktion des wärmsten Adsorbers (A3) und der kälteste Adsorber (A1) die Position des kältesten Desorbers (D3) übernimmt.

2. Adsorptionswärmepumpe gemäß Anspruch 1, **dadurch gekennzeichnet, dass** die Desorber mit Ausnahme des wärmsten Desorbers (D1) derart umschaltbar sind, dass ein Desorber jeweils die Position und Funktion des nächstwärmeren Desorbers übernimmt.

3. Adsorptionswärmepumpe gemäß Anspruch 1 oder 2, **dadurch gekennzeichnet, dass** die Adsorber mit Ausnahme des kältesten Adsorbers (A1) derart umschaltbar sind, dass ein Adsorber jeweils die Position und Funktion des nächstkälteren Adsorbers übernimmt.

4. Adsorptionswärmepumpe nach einem der Ansprüche 1 bis 3, **dadurch gekennzeichnet, daß** eine weitere mit den Verdampfern (V) und Kondensatoren (K) verbundene Umschalteinrichtung (U2) vorgesehen ist, mit der die Verdampfer (V) und Kondensatoren (K) der Reihe nach in ihrer Funktion derart umschaltbar sind, dass der wärmste Kondensator (K1) die Position und Funktion des wärmsten Verdampfers (V1) und der kälteste Verdampfer (V3) die Position des kältesten Kondensators (K3) übernimmt.

5. Adsorptionswärmepumpe gemäß einem der Ansprüche 1 bis 4, **dadurch gekennzeichnet, dass** die Kondensatoren mit Ausnahme des wärmsten Kondensators (K1) derart umschaltbar sind, dass ein Kondensator jeweils die Position und Funktion des nächstwärmeren Kondensators übernimmt.

6. Adsorptionswärmepumpe gemäß einem der Ansprüche 1 bis 5, **dadurch gekennzeichnet, dass** die Verdampfer mit Ausnahme des kältesten Verdampfers (V3) derart umschaltbar sind, dass ein Verdampfer jeweils die Position und Funktion des nächstkälteren Verdampfers übernimmt.

7. Adsorptionswärmepumpe mit mehreren Modulen nach einem der Ansprüche 4 bis 6, wobei eine mit Verdampfern (V) und den Kondensatoren (K) verbundene Umschalteinrichtung (U2) vorgesehen ist, mit der die Verdampfer (V) und die Kondensatoren (K) der Reihe nach in ihrer Funktion umschaltbar sind, **dadurch gekennzeichnet, dass** jeweils einer der Kondensatoren (K1, K2 oder K3) durch die Umschaltvorrichtung (U2) als Verdampfer (V1, V2 oder V3) geschaltet ist und ein Verdampfer (V1, V2 oder V3) als Kondensator (K1, K2 oder K3) geschaltet ist, wobei der gerade geschaltete Verdampfer und Kondensator, der somit den Hochdruckbereich oder den Niederdruckbereich verlassen hat, bis zum nächsten Schaltvorgang nicht vom Wärmeträger (W2/W3) durchströmt ist.

8. Adsorptionswärmepumpe nach Anspruch 7, **dadurch gekennzeichnet, dass** im Hochdruckbereich oder im Niederdruckbereich verbleibende Verdampfer (V1, V2 oder V3) bzw. Kondensatoren (K1, K2 oder K3) vom Warmeträger (W2/W3) durchströmt bleiben.

## Claims

1. An adsorption heat pump having several modules wherein, apart from a load circuit (W4) comprising a load (V), a pump (P4) and two heat exchangers (KWT, NWT), a total of three heat transfer circuits (W1, W2, W3), each comprising a pump (P1, P2, P3), are connected together, one of which (W1) connects all adsorbers (A) and desorbers (D) of all modules (M1, M2, M3, M4, M5, M6) serially with a high-temperature heat exchanger (HTW), which letter is exposable to the flames of a burner (B), with a low-temperature heat exchanger (NTW) and with a pump (P1), wherein further in a second heat transfer circuit (W2), the condensers (K1, K2, K3) of the modules (M1, M2, M3) are serially connected with a condenser heat exchanger (KTW) und the pump (P2), and wherein in a third heat transfer circuit (W3) the evaporators (V1, V2, V3) of the modules (M4, M5, M6) are serially connected with an evaporator heat exchanger (VWT) and a pump P3), **characterised in that** at least one switchable selector unit (U1) connected with the adsorbers (A) and desorbers (D) is provided, which enables the adsorbers (A) and desorbers (D) to be switched consecutively in their functions in such a way that the warmest desorber (D1) takes over the position and function of the warmest adsorber (A3) and the coldest adsorber (A1) takes over the position of the coldest desorber (D3).

2. An adsorption heat pump as claimed in Claim 1 **characterised in that** the desorbers, with the exception of the warmest desorber (D1), can be switched in such a way that a desorber takes over the position and function of the next warmer desorber.

3. An adsorption heat pump as claimed in Claims 1 and 2 **characterised in that** the adsorbers, with the exception of the coldest adsorber (A1), can be switched in such a way that an adsorber takes over the position and function of the next colder adsorber.

4. An adsorption heat pump as claimed in any of Claims 1 to 3 **characterised in that** the a further switchable selector unit (U2) connected with the evaporators (V) and condensers (K) is provided, which enables the evaporators (V) and condensers (K) to be switched consecutively in their functions in such a way that the warmest condenser (K1) takes over the position and function of the warmest evaporator (V1) and the coldest evaporator (V3) takes over the position of the coldest condenser (K3).

5. An adsorption heat pump as claimed in any of Claims 1 to 4 **characterised in that** the condensers, with the exception of the warmest condenser (K1), can be switched in such a way that a condenser takes over the position and function of the next warmer condenser.

6. An adsorption heat pump as claimed in any of Claims 1 to 5 **characterised in that** the evaporators, with the exception of the coldest evaporator (V3), can be switched in such a way that an evaporator takes over the position and function of the next colder evaporator.

7. An adsorption heat pump with several modules as claimed in any of Claims 4 to 6 wherein a switchable selector unit (U2) connected with the evaporators (V) and condensers (K) is provided, which enables the evaporators (V) and condensers (K) to be switched consecutively in their functions **characterised in that** the selector unit (U2) can selectively switch over one of the condensers (K1, K2 or K3) to the function of an evaporator (V1, V2 or V3) and an evaporator (V1, V2 or V3) to the function of a condenser (K1, K2 or K3), with the proviso that the evaporator and condenser just selected in this manner, which has left the high-pressure range or low-pressure range, respectively, is no longer connected to the flow of the heat transfer medium (W2/W3).

8. An adsorption heat pump as claimed in Claim 7 **characterised in that** the evaporators (V1, V2 or V3) and the condensers (K1, K2 or K3) remaining in the high-pressure range or low-pressure range, respectively, remain connected to the flow of the heat transfer medium (W2/W3).

## Revendications

1. Thermopompe à adsorption avec plusieurs modules groupant, en plus d'un circuit utilisateur (W4) doté d'un utilisateur (V), d'une pompe (P4) ainsi que de deux échangeurs de chaleur (KWT, NWT), au total au moins trois circuits calorifères (W1, W2, W3) comprenant chacun une pompe (P1, P2, P3), et dont le circuit (W1) relie en série tous les adsorbants (A) et désorbants (D) de tous les modules (M1, M2, M3, M4, M5, M6) à un échangeur de chaleur ht (HWT) alimenté par un brûleur (B), à un échangeur de chaleur bt (NWT) ainsi qu'à une pompe (P1), un autre circuit calorifère (W2) reliant en série les condensateurs (K1, K2, K3) des modules (M1, M2, M3) à un échangeur de chaleur à condensateur (KWT) et à la pompe (P2), et un troisième circuit calorifère (W3) reliant en série les évaporateurs (V1, V2, V3) de tous les modules (M4, M5, M6) à un échangeur de chaleur à évaporateur (VWT) et à une pompe (P3), **thermopompe caractérisée par le fait qu'**il est prévu au moins un organe commutateur (U1) relié aux adsorbants (A) et désorbants (D) et permettant de commuter successivement la fonction des adsorbants (A) et désorbants (D) de sorte que le désorbant le plus chaud (D1) assume la position et la fonction de l'adsorbant le plus chaud (A3), et l'adsorbant le plus froid (A1), la position du désorbant le plus froid (D3).

2. Thermopompe à adsorption suivant la revendication 1, **caractérisée par le fait que** les désorbants, à l'exception du désorbant le plus chaud (D1), peuvent être commutés de sorte qu'un désorbant assume la position et la fonction du désorbant plus chaud suivant.

3. Thermopompe à adsorption suivant les revendications 1 ou 2, **caractérisée par le fait que** les adsorbants, à l'exception de l'adsorbant le plus froid (A1), peuvent être commutés de sorte qu'un adsorbant assume la position et la fonction de l'adsorbant plus froid suivant.

4. Thermopompe à adsorption suivant l'une des revendications 1 à 3, **caractérisée par le fait qu'**il est prévu un deuxième organe commutateur (U2) relié aux évaporateurs (V) et aux condensateurs (K) et permettant successivement la commutation de la fonction des évaporateurs (V) et des condensateurs (K) de sorte que le condensateur le plus chaud (K1) assume la position et la fonction de l'évaporateur le plus chaud (V1) et que l'évaporateur le plus froid (V3), la position du condensateur le plus froid (K3).

5. Thermopompe à adsorption suivant l'une des revendications 1 à 4, **caractérisée par le fait que**, à l'exception du condensateur le plus chaud (K1), les condensateurs sont commutables de sorte qu'un condensateur assume la position et la fonction du condensateur plus chaud suivant.

6. Thermopompe à adsorption suivant l'une des revendications 1 à 5, **caractérisée par le fait que**, à l'exception de l'évaporateur le plus froid (V3), les évaporateurs sont commutables de sorte qu'un évaporateur assume la position et la fonction de l'évaporateur plus froid suivant.

7. Thermopompe à adsorption avec plusieurs modules suivant l'une des revendications 4 à 6, avec un organe commutateur (U2) relié à des évaporateurs (V) et aux condensateurs (K) et permettant de commuter successivement la fonction des évaporateurs (V) et des condensateurs (K), **thermopompe caractérisée par le fait que** chaque fois que l'un des condensateurs (K1, K2 ou K3) est commuté par l'organe (U2) en évaporateur (V1, V2 ou V3), et un évaporateur (V1, V2 ou V3) en condensateur (K1, K2 ou K3), l'évaporateur et le condensateur concerné qui a ainsi quitté l'aire H.P. ou l'aire B.P. ne communique plus avec le circuit calorifère (W2/W3) jusqu'à la commutation suivante.

8. Thermopompe à adsorption suivant la revendication 7, **caractérisée par le fait que** les évaporateurs (V1, V2 ou V3) respectivement les condensateurs (K1, K2 ou K3) restant dans l'aire H.P. ou B.P. continuent à être alimentés par le circuit calorifère (W2/W3).
